# DEMANDE DE BREVET EUROPEEN

(11) **EP 1 065 590 A1**
(43) Date de publication de la demande: **03.01.2001**
(21) Numéro de dépôt: 99460045.0
(22) Date de dépôt: 28.06.1999
(51) Int. Cl.: G06F 9/445, G06F 15/177

(54) **Architecture de système de traitement multimédia**

(71) Demandeur: TRT LUCENT TECHNOLOGIES, 75008 Paris (FR)
(72) Inventeur: Richter, Gérard, 06640 Saint Jeannet (FR); Solves, Jean-Yves, 06600 Antibes (FR)
(74) Mandataire: Ballot, Paul

(57) **Abrégé**

La présente invention concerne une architecture de système de traitement multimédia destiné à effectuer une pluralité de tâches multimédia sur des données multimédia. Ce système comporte une pluralité de blocs de traitement multimédia, au moins un bus de communication pour transporter des flux de données multimédia entre les blocs de traitement multimédia, et une interface d'application pour gérer lesdits blocs de traitement multimédia. L'interface d'application de crée, pour chaque tâche multimédia, un sous-ensemble de blocs de traitement multimédia à assembler pour mettre en oeuvre la tâche multimédia. Dans cette architecture, chaque bloc de traitement multimédia comporte au moins une interface d'entrée pour se connecter en réception à un bus de communication et/ou au moins une interface de sortie pour se connecter en émission. Pour créer un sous-ensemble de blocs de traitement multimédia, l'interface d'application sélectionne des blocs de traitement multimédia pour former l'ensemble, puis procède à l'examen des interfaces d'entrée et de sortie desdits blocs de traitement multimédia sélectionnés en vue de vérifier si tous les échanges de données multimédia relatifs à l'exécution de la tâche multimédia correspondante sont possibles au sein dudit sous-ensemble et de déterminer, pour ces échanges, le format de codage des données multimédia à échanger et les bus de communication à utiliser pour relier, deux à deux, les différents blocs de traitement multimédia dudit sous-ensemble en fonction de la complémentarité des ports de leur interface d'entrée et de sortie respectifs.

## Description

La présente invention concerne une architecture de système de traitement multimédia.

Avec l'émergence de la communication multimédia sont apparus de nombreux systèmes capables de traiter des signaux aussi divers que'de la voix, du texte ou des images. Ce sont par exemple des systèmes de messagerie vocale, des systèmes de messagerie unifiée ou des serveurs vocaux interactifs. L'invention sera plus particulièrement décrite à travers l'exemple d'un système de messagerie unifiée sans qu'on puisse y voir une quelconque limitation de la portée de l'invention à cette application.

Les systèmes de messagerie unifiée sont des systèmes chargés d'enregistrer des messages de natures diverses, tels que des messages téléphoniques, des messages électroniques ou des télécopies, et de les présenter ensuite à leur destinataire sous leur forme d'origine (voix, texte internet, texte fax,...) ou sous une forme nouvelle. Les services ou tâches multimédia proposés par de tels systèmes sont très variés et, à titre d'illustration, on peut citer les exemples de tâches suivants :
1) enregistrement des messages téléphoniques ;
2) écoute des messages téléphoniques ;
3) écoute des messages électroniques ;

La mise en oeuvre de ces tâches multimédia requiert des moyens de connexion au réseau téléphonique et au réseau internet pour recevoir les messages, des moyens de traitement multimédia plus spécifiques pour les transformer et des bus de communication pour mettre en relation ces différents moyens.

Ainsi, s'agissant de l'enregistrement de messages téléphoniques, ce service requiert un moyen de connexion au réseau téléphonique et un dispositif d'enregistrement qui comprime et sauvegarde les messages dans une unité de stockage du système. Le service d'écoute des messages téléphoniques nécessite, pour sa part, un moyen de connexion au réseau téléphonique, éventuellement un dispositif de reconnaissance vocale pour que l'abonné dialogue avec le système afin de sélectionner le message qu'il veut écouter ou un dispositif de détection DTMF pour détecter les touches de téléphone enfoncées par l'usager pour sélectionner le message, et un dispositif de lecture qui vienne lire, dans l'unité de stockage, le fichier correspondant au message sélectionné, le décomprimer et créer, à partir du fichier, un flux de données multimédia pour reproduire le message téléphonique. Enfin, le service d'écoute des messages électroniques requiert, en plus des moyens nécessaires à l'écoute des messages téléphoniques, un dispositif de synthèse vocale pour transformer les messages électroniques en voix.

Actuellement, tous les systèmes de traitement multimédia sont bâtis autour d'un bus standard de type PCI, Compact PCI ou VME, incluant un bus à multiplexage temporel (TDM) spécifique pour le transport des données multimédia. Ce bus spécifique est optimisé pour le transport de la voix avec un débit de 64 kbps.

Or, étant donné la diversité des séquences multimédia (audio, vidéo,...) à transporter et la diversité des formats de codage des données de ces séquences (il existe en effet de nombreux formats de codage audio, vidéo ou texte), il apparaît clairement que le mode de transport TDM n'est pas adapté pour des applications multimédia. Le mode ATM (Asynchronous Transfert Mode) serait certainement plus approprié pour faire face à la variété de bandes passantes des flux multimédia de ce genre de système. Cependant, il ne faut pas se limiter à ce mode de transport et prévoir des systèmes qui soient capables de gérer des transferts de données multimédia à travers une pluralité de bus et de protocoles de communication différents (ATM, TDM, TCP, UDP,...).

Aussi, l'invention procède d'une recherche menée relativement à des architectures de système de traitement multimédia en vue de proposer un système de traitement multimédia évolutif pouvant fonctionner avec tous types de bus de communication et permettant une gestion simple des moyens de traitement multimédia et des flux multimédia.

Aussi, l'invention a pour objet une architecture de système de traitement multimédia destiné à effectuer une pluralité de tâches multimédia sur des données multimédia, comportant
- une pluralité de blocs de traitement multimédia pour mettre en oeuvre chacun tout ou partie des opérations nécessaires pour l'exécution d'une tâche multimédia,
- au moins un bus de communication pour transporter des flux de données multimédia entre lesdits blocs de traitement multimédia,
- une interface d'application pour gérer lesdits blocs de traitement multimédia, ladite interface d'application étant chargée de créer, pour chaque tâche multimédia, un sous-ensemble de blocs de traitement multimédia à assembler pour mettre en oeuvre ladite tâche multimédia,
caractérisé en ce que chaque bloc de traitement multimédia comporte au moins une interface d'entrée pour se connecter en réception sur ledit au moins bus de communication et/ou au moins une interface de sortie pour se connecter en émission sur ledit au moins bus de communication, au moins l'une des interfaces d'entrée et l'une des interfaces de sortie comportant plusieurs ports pour connexion sur des bus de communication respectifs,
et en ce que, pour créer un sous-ensemble de blocs de traitement multimédia, l'interface d'application sélectionne des blocs de traitement multimédia pour former ledit ensemble, puis procède à l'examen des interfaces d'entrée et de sortie desdits blocs de traitement multimédia sélectionnés en vue de vérifier si tous les échanges de données multimédia relatifs à l'exécution de la tâche multimédia correspondante sont possibles au sein dudit sous-ensemble et de déterminer, pour ces échanges, le format de codage des données multimédia à échanger et les bus de communication à utiliser pour relier, deux à deux, les différents blocs de traitement multimédia dudit sous-ensemble en fonction de la complémentarité des ports de leur interface d'entrée et de sortie respectifs.

En cas d'impossibilité pour les échanges au terme de l'examen des interfaces d'entrée et de sortie du sous-ensemble sélectionné, l'interface d'application modifie alors la sélection des blocs de traitement multimédia.

Une telle architecture permet ainsi d'utiliser une interface d'application identique quel que soit le nombre ou le type de bus de communication employés dans le système.

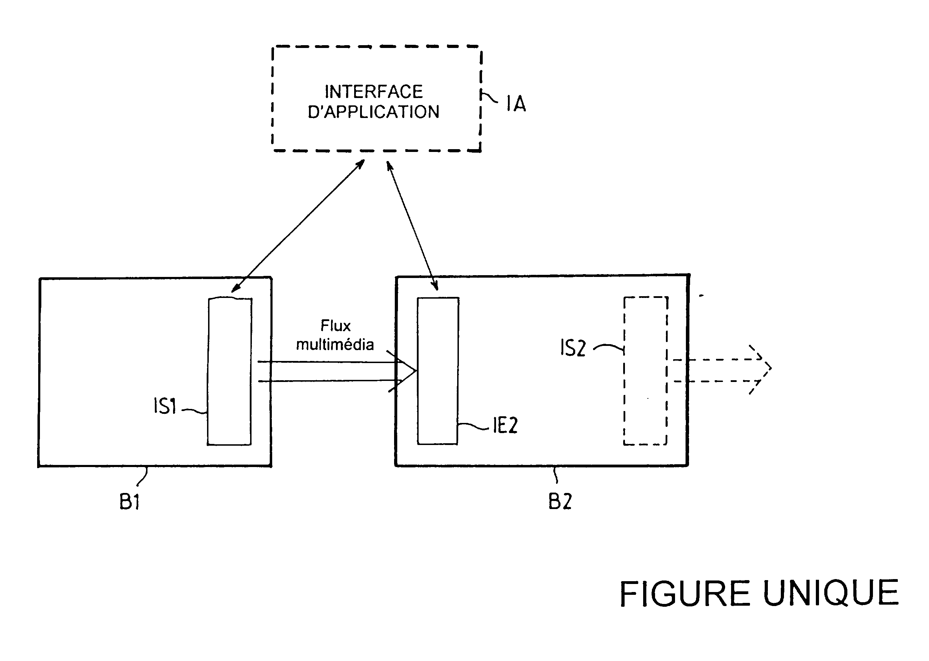

D'autres avantages et caractéristiques de l'invention apparaîtront à la lecture de la description détaillée qui suit et qui est faite en référence à la figure unique qui représente un schéma de principe de fonctionnement du système de traitement multimédia selon l'invention.

En référence à la figure unique, le système de traitement multimédia comporte une interface d'application IA dans laquelle sont définies les tâches (ou services) multimédia mises en oeuvre par le système. Le système comporte par ailleurs un ou plusieurs bus de communication (non représentés sur la figure) pour le transport des données multimédia à travers le système.

Le système de cette figure comporte également deux blocs de traitement multimédia, B1 et B2, pour la mise en oeuvre d'une tâche multimédia. Au moment de leur introduction dans le système, ces blocs sont déclarés auprès de l'interface d'application IA.

Chaque bloc de traitement multimédia du système comporte une interface de sortie pour se connecter en émission à l'un des bus de communication du système et/ou une interface d'entrée pour se connecter en réception. Dans l'exemple de la figure unique, le bloc B1 comporte une interface de sortie IS1 et le bloc B2 comporte une interface d'entrée IE2 et une interface de sortie IS2.

Pour chaque tâche multimédia, l'interface d'application IA crée un sous-ensemble des blocs de traitement multimédia nécessaires à la mise en oeuvre de ladite tâche. Pour créer ces ensembles, l'interface d'application doit connaître la capacité de chacun des blocs de traitement multimédia à se connecter en émission ou en réception aux différents bus de communication du système. C'est pourquoi, lors de la création d'un sous-ensemble, l'interface d'application IA sélectionne un premier sous-ensemble de blocs puis procède à l'examen des interfaces d'entrée et de sortie des blocs sélectionnés en vue de vérifier si tous les échanges relatifs à la tâche à mettre en oeuvre sont possibles. Ainsi, pour déterminer si un flux multimédia peut être établi entre le bloc B1 et le bloc B2, l'interface d'application examine les ports de connexion de l'interface de sortie IS1 du bloc B1 et ceux de l'interface d'entrée du bloc B2. Si ces deux interfaces ont des ports permettant de se connecter à un réseau de communication commun, les échanges de données sont possibles. Si les deux blocs peuvent accéder à plusieurs bus de communication communs, l'interface d'application IA choisit le réseau le plus approprié compte tenu de la nature des données multimédia.

Lors de l'examen des interfaces de sortie et d'entrée des deux blocs à mettre en communication, l'interface d'application vérifie également que ces deux interfaces sont aptes, respectivement, à émettre et à recevoir des données multimédia ayant le même format de codage.

L'examen des interfaces est illustré par l'exemple suivant. On considère un système de traitement multimédia comportant un réseau ATM, un réseau UDP et un bus TDM. Ce système comporte également, par exemple pour l'écoute de messages électroniques, un dispositif de synthèse vocale pour transcrire les messages écrits en voix et un dispositif de connexion au réseau téléphonique pour que le destinataire de ces messages puissent les écouter par le biais du téléphone. L'interface de sortie du dispositif de synthèse vocale comporte un port de connexion au bus ATM et un port de connexion au bus TDM. Par ailleurs, cette interface peut émettre des données multimédia codées selon le format G711 Alaw ou selon le format G711 µlaw.

D'autre part, l'interface d'entrée du dispositif de connexion au réseau téléphonique comporte un port de connexion au bus TDM et un autre au bus UDP et elle est apte à traiter des données codées selon le format G711µlaw ou G728.

| | Dispositif de synthèse vocale | Dispositif de connexion au réseau téléphonique |
|---|---|---|
| Modes de transport possibles | TDM | TDM |
| | ATM | UDP |
| | | |
| Formats de codage possibles | G711 Alaw | G711 µlaw |
| | G711 ulaw | G728 |

Au moment de la création d'un sous-ensemble nécessitant ces deux blocs de traitement, l'interface d'application vient examiner si un flux de données multimédia peut être établi entre ces deux blocs. Dans le cas présent, les deux blocs peuvent communiquer par l'intermédiaire du bus TDM en utilisant le format G711 µlaw. L'interface d'application valide alors les deux blocs dans le sous-ensemble et leur liaison (utilisation du bus TDM et du format G711 µlaw).

En cas d'impossibilité au terme de cet examen des interfaces, l'interface d'application modifie la composition du sous-ensemble jusqu'à obtenir les échanges nécessaires à la mise en oeuvre de la tâche multimédia. La modification du sous-ensemble peut consister à rajouter un bloc de codage/décodage lorsqu'il y a incompatibilité au niveau du format de codage. Bien entendu, pour que ce bloc soit introduit dans le sous-ensemble, il faut qu'il soit présent dans le système.

En variante, on pourrait envisager un système dans lequel l'interface d'application IA se contente d'ordonner aux blocs de traitement du sous-ensemble de se connecter entre eux. Toute l'intelligence du système serait alors concentrée au niveau des blocs de traitement.

Ensuite, au moment de l'exécution de la tâche multimédia, l'interface d'application met en service tour à tour les blocs de traitement multimédia du sous-ensemble et gère les flux multimédia entre blocs en sélectionnant les ports de connexion et les formats de codage retenus lors de la création du sous-ensemble.

Une telle architecture permet de ne pas avoir à définir au préalable les connexions entre blocs pour chaque tâche multimédia et d'obtenir ainsi un système plus flexible. Cette architecture permet notamment de mettre en place des configurations de traitement multimédia très complexes avec, par exemple, des annuleurs d'écho ou des blocs de codage ou décodage avec une interface d'application très simple.

## Revendications

1. Architecture de système de traitement multimédia destiné à effectuer une pluralité de tâches multimédia sur des données multimédia, comportant
- une pluralité de blocs de traitement multimédia pour mettre en oeuvre chacun tout ou partie des opérations nécessaires pour l'exécution d'une tâche multimédia,
- au moins un bus de communication pour transporter des flux de données multimédia entre lesdits blocs de traitement multimédia,
- une interface d'application pour gérer lesdits blocs de traitement multimédia, ladite interface d'application étant chargée de créer, pour chaque tâche multimédia, un sous-ensemble de blocs de traitement multimédia à assembler pour mettre en oeuvre ladite tâche multimédia,
caractérisé en ce que chaque bloc de traitement multimédia comporte au moins une interface d'entrée pour se connecter en réception sur ledit au moins bus de communication et/ou au moins une interface de sortie pour se connecter en émission sur ledit au moins bus de communication, au moins l'une des interfaces d'entrée et l'une des interfaces de sortie comportant plusieurs ports pour connexion sur des bus de communication respectifs,
et en ce que, pour créer un sous-ensemble de blocs de traitement multimédia, l'interface d'application sélectionne des blocs de traitement multimédia pour former ledit ensemble, puis procède à l'examen des interfaces d'entrée et de sortie desdits blocs de traitement multimédia sélectionnés en vue de vérifier si tous les échanges de données multimédia relatifs à l'exécution de la tâche multimédia correspondante sont possibles au sein dudit sous-ensemble et de déterminer, pour ces échanges, le format de codage des données multimédia à échanger et les bus de communication à utiliser pour relier, deux à deux, les différents blocs de traitement multimédia dudit sous-ensemble en fonction de la complémentarité des ports de leur interface d'entrée et de sortie respectifs.

2. Architecture selon la revendication 1, caractérisée en ce que, en cas d'impossibilité pour les échanges au terme de l'examen des interfaces d'entrée et de sortie du sous-ensemble sélectionné, l'interface d'application modifie ladite sélection de blocs de traitement multimédia.
